# EUROPEAN PATENT SPECIFICATION

(11) **EP 1 206 364 B1**
(45) Date of publication and mention of the grant of the patent: **04.01.2006**
(21) Application number: 00953156.7
(22) Date of filing: 01.08.2000
(51) Int. Cl.: B60J 10/02, B60J 10/00

(54) **VEHICLE GLAZING**
FAHRZEUGVERGLASUNG
VITRAGE DE VEHICULE

(30) Priority: 03.08.1999 EP 99202529
(43) Date of publication of application: 22.05.2002
(73) Proprietor: GLAVERBEL, B-1170 Bruxelles (BE)
(72) Inventor: LEGRAND, Denis, 6040 Jumet (BE)
(74) Representative: Farmer, Guy Dominic
(86) International application number: PCT/EP2000/007568
(87) International publication number: WO 2001/008915

(56) References cited:
- EP-A- 0 258 128
- EP-A- 0 268 815
- WO-A-95/21749
- WO-A-97/16325
- DE-A- 4 026 205
- US-A- 5 088 787

## Description

This invention relates to vehicle glazings and to their fixing and sealing in the bodywork of a vehicle.

Vehicle glazings are commonly sealed in a vehicle bodywork with the help of a sealing profile. Such sealing profiles may provide a substantially watertight seal so as to prevent the ingress of water; alternatively or additionally they may contribute to the aesthetic appearance of the assembled glazing and/or to the reduction in aerodynamic noise (for example by limiting the gap between the edge of the glazing and the vehicle bodywork) and/or facilitate assembly of the glazing in the bodywork. Sealing profiles are commonly used for mass produced automotive glazings but are not limited to such applications.

A further aspect to which the design and arrangement of a sealing profile may contribute is to prevent the phenomena of squeaking, that is a the squeaking noise that may sometimes be caused by a profile rubbing against the vehicle bodywork, for example when flexing and deformation of the bodywork during normal driving conditions causes relative movement between the glazing and the bodywork. The relative movement may be caused by a difference in the frequency of vibration between the glazing and the bodywork.

There is known patent application WO-A-97/16 325, disclosing at its figure 2 a vehicle glazing panel (31) having a sealing profile (32) positioned at one of its major surfaces, which is adapted to permit the sealing profile (32) to be assembled in a glazing frame (37) of a vehicle, in which the sealing profile comprises:
- a lip (39) adapted to provide a contact seal against a vehicle's bodywork (37) and
- a substantially rigid supporting portion (34) adapted to maintain the distance between the glazing (31) and the body work (37) of the vehicle and
- a substantially soft spacing portion (41) by means of which the supporting portion (34) is adapted to be spaced from the vehicle's bodywork (37).

In this known vehicle glazing panel (31), a part (36) of the rigid supporting portion (34) does not stay spaced from the vehicle's bodywork (37) and goes through the surface of that bodywork (37). Moreover, the soft sealing portion (39, 32, 35) and the upper part of the rigid supporting portion are surrounding the edge (33) of the panel (31) and both major surfaces of that panel. Such a configuration does not prevent the phenomena of squeaking

According to a first aspect, the present invention provides a glazing panel as defined in Claim 1.

The different portions of the sealing profile preferably fulfil the following functions:
a) the substantially soft sealing portion preferably provides a substantially water tight seal against the vehicle bodywork, for example within the recess of the frame in the bodywork in which the glazing is assembled. In addition, the substantially soft nature of this portion preferably reduces or eliminates squeaking. The lip may be substantially flexible and this flexibility may enable it to absorb relative movement between the glazing and the bodywork. Alternatively, or additionally, the nature of the lip may be such as to facilitate reduction of or elimination of squeaking. For example, the lip may be made of a squeak resistance material and/or may comprise a lubricant to reduce or eliminate squeaking.
b) the substantially rigid supporting portion preferably acts as a stop to facilitate correct assembly of the glazing in the bodywork, particularly in terms of the depth at which the glazing is positioned in a frame or recess;
c) the substantially soft spacing portion (which may be a substantially thin portion) preferably provides an additional seal between the glazing and the bodywork and may help to alleviate or eliminate squeaking and/or permit use of a material for the substantially rigid supporting portion which would otherwise lead to squeaking.

The lip portion of the sealing portion and/or a corresponding portion of the bodywork may be provided with a coating and/or lacquer which is adapted to reduce squeaking.

The feature defined in Claim 2 may facilitate assembly of the glazing panel in a frame so as to be flush or substantially flush with the surrounding bodywork. This may be aesthetically desirable and/or advantageous for reducing aerodynamic noise.

Adhering at least the supporting portion of the sealing profile to the glazing may provide a convenient way of attaching the profile to the glazing, particularly in arrangements in which the sealing profile is only positioned at one major surface of the glazing panel.

Mechanical interconnection of the substantially soft sealing portion of the profile with the substantially rigid portion of the profile may provide the only or the most significant means of attachment between these portions. This may enable these portions to be manufactured separately, for example by moulding or extrusion, and subsequently assembled together and hence simplify the manufacturing equipment required. Where the substantially soft sealing portion of the profile and the substantially rigid portion of the profile are made from different materials, chemical and/or adhesive assembly between them may not be possible or may not be practical or sufficient. Mechanical interconnection may alleviate such problems. The mechanical interconnection, when used, may be enhanced and/or supplemented by a chemical or adhesive bonding. The foregoing remarks apply equally to connection between the substantially soft spacing portion of the profile and the substantially rigid portion of the profile.

Preferably, both the substantially soft sealing portion of the profile and the substantially soft spacing portion of the profile are mechanically interconnected with the substantially rigid portion of the profile.

Arranging for the substantially rigid supporting portion of the sealing profile to have a Shore A hardness that is greater than 60 may enhance its ability to provide suitable rigidity to the profile ; arranging for the substantially soft sealing portion and substantially soft spacing portion to have a Shore A hardness that is less than 50 may enhance their ability to provide a good sealing and/or anti-squeaking function. The substantially rigid supporting portion of the sealing profile may have a Shore A hardness that is greater than 70,75,80,85,90 or 95 (preferably between about 60 and 90) whilst the soft sealing portion and substantially soft spacing portion may have a Shore A hardness that is less than 45, 40, 35 or 30 (preferably between about 40 and 50).

Polyurethane may be particularly advantageous as a material for the substantially rigid supporting portion of the profile; it may be formed to have suitable mechanical and chemical characteristics and may be processed to form a profile by, for example, moulding or extrusion. Similarly, EPDM may be advantageously used for the soft sealing portion and substantially soft spacing portions of the profile.

Forming the substantially soft sealing portion and substantially soft spacing portion as a single integral piece may facilitate both the manufacturing process and, in arrangements involving subsequent assembly with the substantially rigid supporting portion, the assembly process (as it may be more convenient to assemble the overall profile from two separate pieces rather than three separate pieces).

One or each portion of the profile may be formed by extrusion. This provides a convenient manufacturing method which is reasonably flexible (different shapes of profile may be formed by changing the extrusion head without significantly altering the overall extrusion process and machinery) and which requires less investment and delay than, for example, injection moulding systems. Forming each part of the profile by extrusion enhances these advantages. Whilst the profile may be formed by co-extrusion of its different portions, Claim 10 provides a particularly convenient and simple arrangement in which the complexities of moulding and co-extrusion may be avoided.

Glazing panels according to the present invention may suitably be adhered to the vehicle bodywork, for example using a band of polyurethane glue. This is a convenient and commonly used assembly method, particularly where it is desired for the glazing to be flush or substantially flush with its surrounding bodywork.

According to another aspect, the invention provides a sealing profile as defined in claim 12.

According to a further aspect, the invention provides a method of manufacturing a sealing profile as defined in claim 13.

The invention may be particularly suited to use in connection with rear vehicle screens. It may also be advantageously used in connection with vehicle windscreens, fixed or pivoting vehicle side windows and vehicle sunroofs.

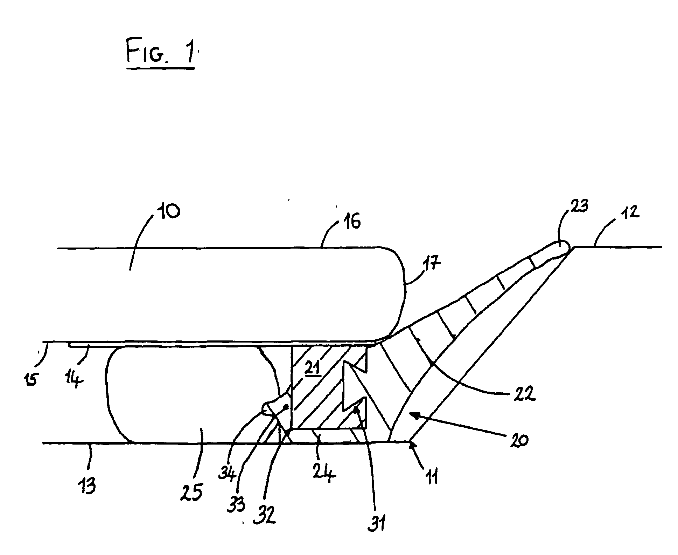

An embodiment of the present invention will now be described, by way of example only, with reference Fig 1 which is a cross section through part of a rear screen of a car assembled in a car bodywork.

Fig 1 shows part of an automotive glazing panel 10, which in this case is a rear screen for a car, assembled in the car bodywork 11. The bodywork has a surface portion 12 which forms part of the exterior of the car body and a recessed portion 13 which forms a frame in which the glazing panel 10 is arranged.

The glazing panel has two major surfaces. These are the internal face 15 of the glazing and the external face 16 of the glazing. An edge surface 17 joins the major surfaces. A band of black enamel 14 runs around the periphery of the internal face 15 of the glazing.

The glazing panel 10 is provided with a sealing profile 20. The sealing profile may be provided at one or more than one edges of the glazing panel; it may be provided around the entire or substantially the entire periphery of the glazing panel.

The profile 20 comprises
a) a substantially rigid supporting portion 21 which is formed as an extrusion from a polyurethane material and is adhered to the internal face 15 of the glazing panel. In this embodiment, the substantially rigid spacing portion 21 is adhered to the band of black enamel 14 on the internal face 15 of the glazing panel but it may be adhered directly to the glazing panel. This portion may be extruded in one operation, hardened and subsequently adhered to the glazing. Alternatively, it may be extruded directly onto the glazing, for example in the form of a paste, and subsequently hardened. The hardening may be, for example, by processing or simply by cooling.
b) a sealing portion 22 which comprises a lip portion 23 which forms a contact seal against part of the vehicle bodywork. In this embodiment the contact seal is formed within the recess 13 formed by the bodywork but this need not be the case.
c) a spacing portion 24.

The sealing portion 22 and spacing portion 24 form a single integral piece which is extruded in a single operation from a substantially soft EPDM material.

A first mechanical interconnection 31 in the form of a dovetail joint ensures mechanical connection between the sealing portion 22 and the supporting portion 21.

A second mechanical interconnection 32 in the form of a hook provides mechanical interconnection between the spacing portion 24 and the supporting portion 21.

In this embodiment, the connections are enhanced due to the sealing portion 22 and the spacing portion 24 being formed as an integral piece with each portion being connected to the supporting portion 21. The combination of the mechanical interconnections 31, 32 enhances the assembly.

The glazing panel 10 is secured to the bodywork by means of a cord of polyurethane adhesive 25.

The external surface 16 of the glazing panel 10 is substantially flush with the surface portion 12 of the surrounding bodywork. This feature is enhanced by the sealing profile 20 in that:
a) the substantially hard supporting portion 21 provides a substantially rigid spacer between the internal surface of the glazing 15 and the recessed portion 13 of the bodywork so as to provide sufficiently accurate control of the depth of the glazing assembly;
b) the substantially thin and substantially soft spacing portion 24 of the profile prevents direct contact between the supporting portion 21 and the vehicle bodywork 13 (direct contact between a substantially hard polyurethane material and the bodywork is particularly prone to cause squeaking) whilst, in addition providing an additional seal and not significantly affecting the accuracy of the depth at which the glazing panel is positioned. The combination of the supporting portion 21 and the spacing portion 24 may be used to achieve a desired rigidity/elasticity of the assembly.

The hook form of the combined spacing 24 and sealing 22 portions of the sealing profile which is formed by an engaging portion 33 of the profile facilitates retention of the assembly. Any tendency for the combined spacing 24 and sealing 22 portions to be displaced with respect to or work themselves free with respect to the substantially rigid supporting portion 21 is restrained by both the mechanical interconnection between the sealing portion 22 and the substantially rigid supporting portion 21 (i.e. the dovetail joint 31 in the illustrated embodiment) and by the mechanical interconnection of the engaging portion 33 with the substantially rigid supporting portion 21. The engaging portion 33 may be retained within the body of the substantially rigid supporting portion 21 (for example so that it projects within the substantially rigid supporting portion 21 to form a mechanical interconnection) or it may co-operate with an exterior portion of the substantially rigid supporting portion 21.

The profile is arranged such that there is direct adhesion between the combined spacing 24 and sealing 22 portions of the sealing profile and the band of adhesive 25 which secures the glazing 10 in the vehicle bodywork. Projection 34 facilitates this. This further anchors the combined spacing 24 and sealing 22 portions of the sealing profile in the desired arrangement and provides an attachment between the combined spacing 24 and sealing 22 portions of the sealing profile and the glazing 10 (by means of adhesive band 25).

## Claims

1. A vehicle glazing panel (10) having a sealing profile (20) positioned at one of its major surfaces (15) which is adapted to permit the glazing panel to be assembled substantially flush in a glazing frame (12) of a vehicle, in which the sealing profile (20) comprises
- a substantially soft sealing portion (22) comprising a lip (23) adapted to provide a contact seal against a vehicle's bodywork (13) and
- a substantially rigid supporting portion (21) adapted to maintain the distance between the glazing (10) and the bodywork of the vehicle (13) and
- a substantially soft spacing portion (24) by means of which the supporting portion (21) is adapted to be spaced from the vehicle's bodywork (13),
**characterized in that** the substantially rigid supporting portion (21) is adhered to the internal face (15) of the glazing panel (10) and the substantially soft spacing portion (24) prevents direct contact and rubbing between the substantially rigid portion (21) and the bodywork (13) of the vehicle and acts as a physical spacer between said substantially rigid supporting portion (21) and said bodywork (13).

2. A vehicle glazing panel (10) in accordance with claim 1, in which the sealing profile (20) is positioned at only one of the major surfaces (15) of the glazing panel (10) .

3. A vehicle glazing panel (10) in accordance with claim 1 or claim 2, in which at least the supporting portion (21) of the sealing profile (20) is adhered to the glazing panel (10).

4. A vehicle glazing panel (10) in accordance with any preceding claim, in which the substantially soft sealing portion (22) of the sealing profile (20) is mechanically interconnected with the substantially rigid supporting portion (21) of the sealing profile (20).

5. A vehicle glazing panel (10) in accordance with any preceding claim, in which the substantially soft spacing portion (24) of the sealing profile (20) is mechanically interconnected (31) with the substantially rigid supporting portion (21) of the sealing profile (20).

6. A vehicle glazing panel (10) in accordance with any preceding claim, in which
- the substantially rigid supporting portion (21) of the sealing profile (20) has a Shore A hardness that is greater than 60 and
- the soft sealing portion (22) and substantially soft spacing portion (24) have a Shore A hardness that is less than 50.

7. A vehicle glazing panel (10) in accordance with any preceding claim, in which the substantially rigid supporting portion (21) of the sealing profile (20) consists essentially of a polyurethane.

8. A vehicle glazing panel (10) in accordance with any preceding claim, in which the soft sealing portion (22) and substantially soft spacing portion (24) of the sealing profile (20) consist essentially of an EPDM material.

9. A vehicle glazing panel (10) in accordance with any preceding claim, in which the substantially soft sealing portion (22) of the sealing profile (20) and the substantially soft spacing portion (24) of the sealing profile (20) are a single, integral piece.

10. A vehicle glazing panel (10) in accordance with any preceding claim, in which
a) the substantially rigid supporting portion (21) of the sealing profile (20) is formed as an extrusion
b) the soft sealing portion (22) and substantially soft spacing portion (24) of the sealing profile (20) are formed by extrusion separately from the substantially rigid supporting portion (21) of the sealing profile (20) and
c) subsequent to their extrusion the substantially soft sealing portion (22), substantially soft spacing portion (24) and substantially rigid supporting portion (21) of the sealing profile (20) are assembled together.

11. A vehicle glazing panel (10) in accordance with any preceding claim, in which the vehicle glazing (10) is adapted to be adhered to the vehicle bodywork (12, 13).

12. A sealing profile (20) positioned at one of the major surfaces (15) of a glazing panel (10) which is adapted to permit the glazing panel (10) comprising the sealing profile (20) to be assembled substantially flush in a glazing frame (12) of a vehicle, in which the sealing profile (20) comprises
- a substantially soft sealing portion (22) comprising a lip (23) adapted to provide a contact seal against a vehicle's bodywork (13) and
- a substantially rigid supporting portion (21) adapted to maintain the distance between the glazing (10) and the bodywork of the vehicle (13) and
- a substantially soft spacing portion (24) by means of which the supporting portion (21) is adapted to be spaced from the vehicle's bodywork (13),
**characterized in that** the substantially rigid supporting portion (21) is adhered to the internal face (15) of the glazing panel (10) and the substantially soft spacing portion (24) prevents direct contact and rubbing between the substantially rigid portion (21) and the bodywork (13) of the vehicle and acts as a physical spacer between said substantially rigid supporting portion (21) and said bodywork (13).

13. A method of manufacturing a sealing profile (20) for a vehicle glazing panel (10) in accordance with any preceding claim comprising the steps of
- extruding the substantially rigid supporting portion (21) of the sealing profile (20) in one extruding operation;
- extruding the substantially soft sealing portion (22) and the substantially soft spacing portion (24) together in an operation that is separate from the extrusion of the substantially rigid supporting portion (21);
- assembling the substantially rigid supporting portion (21), the substantially soft sealing portion (22) and the substantially soft spacing portions (24) of the sealing profile (20) together by means of at least one mechanical interconnection (31).

## Patentansprüche

1. Fahrzeugverglasungsplatte bzw. -paneel (10), die ein Dichtprofil (20) aufweist, das an einer ihrer Hauptoberflächen (15) positioniert ist, welches adaptiert ist, um zu ermöglichen, daß die Verglasungsplatte bzw. das Verglasungspaneel im wesentlichen fluchtend in einem Verglasungsrahmen (12) eines Fahrzeugs angeordnet bzw. zusammengebaut ist, in welcher das Dichtprofil (20) umfaßt
- einen im wesentlichen weichen dichtenden Abschnitt (22), umfassend eine Lippe (23), die adaptiert ist, um eine Kontaktdichtung gegen einen Karosserieaufbau bzw. eine Karosserie (13) des Fahrzeugs zur Verfügung zu stellen, und
- einen im wesentlichen starren unterstützenden bzw. Unterstützungsabschnitt (21), der adaptiert ist, um den Abstand zwischen der Verglasung (10) und der Karosserie des Fahrzeugs (13) aufrechtzuerhalten und
- einen im wesentlichen weichen beabstandenden bzw. Abstandsabschnitt (24), mittels welchem der unterstützende Abschnitt (21) adaptiert ist, um von der Karosserie (13) des Fahrzeugs beabstandet zu sein,
**dadurch gekennzeichnet, daß** der im wesentlichen starre unterstützende Abschnitt (21) an der Innenfläche (15) der Verglasungsplatte (10) angehaftet bzw. festgelegt ist und der im wesentlichen weiche beabstandende Abschnitt (24) einen direkten Kontakt und ein Reiben zwischen dem im wesentlichen starren Abschnitt (21) und der Karosserie (13) des Fahrzeugs verhindert und als ein physikalischer Abstandhalter zwischen dem im wesentlichen starren unterstützenden Abschnitt (21) und der Karosserie (13) wirkt.

2. Fahrzeugverglasungsplatte (10) nach Anspruch 1, in welcher das Dichtprofil (20) an nur einer der Hauptoberflächen (15) der Verglasungsplatte (10) positioniert ist.

3. Fahrzeugverglasungsplatte (10) nach Anspruch 1 oder 2, in welcher wenigstens der unterstützende Abschnitt (21) des Dichtprofils (20) an die Verglasungsplatte (10) angeklebt ist.

4. Fahrzeugverglasungsplatte (10) nach einem der vorhergehenden Ansprüche, in welcher der im wesentlichen weiche Dichtabschnitt (22) des Dichtprofils (20) mechanisch mit dem im wesentlichen starren unterstützenden Abschnitt (21) des Dichtprofils (20) verbunden ist.

5. Fahrzeugverglasungsplatte (10) nach einem der vorhergehenden Ansprüche, in welcher der im wesentlichen weiche Abstandsabschnitt (24) des Dichtprofils (20) mechanisch mit dem im wesentlichen starren unterstützenden Abschnitt (21) des Dichtprofils (20) verbunden (31) ist.

6. Fahrzeugverglasungsplatte (10) nach einem der vorhergehenden Ansprüche, in welcher
- der im wesentlichen starre unterstützende Abschnitt (21) des Dichtprofils (20) eine Shore A Härte aufweist, die größer als 60 ist, und
- der weiche Dichtabschnitt (22) und der im wesentlichen weiche Abstandabschnitt (24) eine Shore A Härte aufweisen, die geringer als 50 ist.

7. Fahrzeugverglasungsplatte (10) nach einem der vorhergehenden Ansprüche, in welcher der im wesentlichen starre unterstützende Abschnitt (21) des Dichtprofils (20) im wesentlichen aus einem Polyurethan besteht.

8. Fahrzeugverglasungsplatte (10) nach einem der vorhergehenden Ansprüche, in welcher der weiche Dichtabschnitt (22) und der im wesentlichen weiche Abstandsabschnitt (24) des Dichtprofils (20) im wesentlichen aus einem EPDM Material bestehen.

9. Fahrzeugverglasungsplatte (10) nach einem der vorhergehenden Ansprüche, in welcher der im wesentlichen weiche Dichtabschnitt (22) des Dichtprofils (20) und der im wesentlichen weiche Abstandsabschnitt (24) des Dichtprofils (20) ein einziges einstückiges bzw. integrales Stück sind.

10. Fahrzeugverglasungsplatte (10) nach einem der vorhergehenden Ansprüche, in welcher
a) der im wesentlichen starre unterstützende Abschnitt (21) des Dichtprofils (20) als eine Extrusion ausgebildet ist,
b) der weiche Dichtabschnitt (22) und der im wesentlichen weiche Abstandsabschnitt (24) des Dichtprofils (20) durch Extrusion gesondert von dem im wesentlichen starren unterstützenden Abschnitt (21) des Dichtprofils (20) ausgebildet sind, und
c) nachfolgend zu ihrer Extrusion der im wesentlichen weiche Dichtabschnitt (22), der im wesentlichen weiche Abstandsabschnitt (24) und der im wesentlichen starre unterstützende Abschnitt (21) des Dichtprofils (20) miteinander zusammengebaut sind bzw. werden.

11. Fahrzeugverglasungsplatte (10) nach einem der vorhergehenden Ansprüche, in welcher die Fahrzeugverglasung (10) adaptiert ist, um an die Fahrzeugkarosserie (12, 13) festgelegt bzw. angehaftet zu werden.

12. Dichtprofil (20), das an einer der Hauptoberflächen (15) einer Verglasungsplatte (10) positioniert ist, welche adaptiert ist, um es der Verglasungsplatte (10), umfassend das Dichtprofil (20), zu ermöglichen, im wesentlichen fluchtend in einem Verglasungsrahmen (12) eines Fahrzeugs angeordnet bzw. zusammengebaut zu werden, in welcher das Dichtprofil (20) umfaßt
- einen im wesentlichen weichen dichtenden Abschnitt (22), umfassend eine Lippe (23), die adaptiert ist, um eine Kontaktdichtung gegen einen Karosserieaufbau bzw. eine Karosserie (13) des Fahrzeugs zur Verfügung zu stellen, und
- einen im wesentlichen starren unterstützenden bzw. Unterstützungsabschnitt (21), der adaptiert ist, um den Abstand zwischen der Verglasung (10) und der Karosserie des Fahrzeugs (13) aufrechtzuerhalten und
- einen im wesentlichen weichen beabstandenden bzw. Abstandsabschnitt (24), mittels welchem der unterstützende Abschnitt (21) adaptiert ist, um von der Karosserie (13) des Fahrzeugs beabstandet zu sein,
**dadurch gekennzeichnet, daß** der im wesentlichen starre unterstützende Abschnitt (21) an der Innenfläche (15) der Verglasungsplatte (10) angehaftet bzw. festgelegt ist und der im wesentlichen weiche beabstandende Abschnitt (24) einen direkten Kontakt und ein Reiben zwischen dem im wesentlichen starren Abschnitt (21) und der Karosserie (13) des Fahrzeugs verhindert und als ein physikalischer Abstandhalter zwischen dem im wesentlichen starren unterstützenden Abschnitt (21) und der Karosserie (13) wirkt.

13. Verfahren zum Herstellen eines Dichtprofils (20) für eine Fahrzeugverglasungsplatte (10) in Übereinstimmung mit einem vorhergehenden Anspruch, umfassend die Schritte
- Extrudieren des im wesentlichen starren unterstützenden Abschnitts (21) des Dichtprofils (20) in einem Extrudiervorgang;
- Extrudieren des im wesentlichen weichen dichtenden bzw. Dichtabschnitts (22) und des im wesentlichen weichen Abstandsabschnitts (24) gemeinsam in einem Vorgang, welcher von der Extrusion des im wesentlichen starren unterstützenden Abschnitts (21) gesondert ist;
- Zusammenbauen des im wesentlichen starren unterstützenden Abschnitts (21), des im wesentlichen weichen Dichtabschnitts (22) und des im wesentlichen weichen Abstandsabschnitts (24) des Dichtprofils (20) mittels wenigstens einer mechanischen Verbindung (31).

## Revendications

1. Vitrage de véhicule (10) ayant un joint d'étanchéité (20) positionné sur une de ses surfaces principales (15), qui est adapté de sorte à permettre au vitrage d'être monté de manière substantiellement affleurante dans un encadrement de vitrage (12) d'un véhicule, dans lequel le joint d'étanchéité (20) comprend
- une portion d'étanchéité (22) substantiellement souple comprenant une lèvre (23) adaptée pour former un élément d'étanchéité par contact avec la carrosserie (13) d'un véhicule
- une portion de soutien (21) substantiellement rigide adaptée pour maintenir la distance entre le vitrage (10) et la carrosserie du véhicule (13) et
- une portion d'espacement (24) substantiellement souple au moyen de laquelle la portion de soutien (21) est adaptée de manière à être écartée de la carrosserie du véhicule (13),
**caractérisée en ce que** la portion de soutien substantiellement rigide (21) est collée sur la face interne (15) du vitrage (10) et la portion d'espacement substantiellement souple (24) empêche le contact direct et le frottement entre la portion substantiellement rigide (21) et la carrosserie (13) du véhicule et agit comme un espaceur physique entre ladite portion de soutien substantiellement rigide (21) et ladite carrosserie (13).

2. Vitrage de véhicule (10) conformément à la revendication 1, dans lequel le joint d'étanchéité (20) est positionné sur seulement une des surfaces principales (15) du vitrage (10).

3. Vitrage de véhicule (10) conformément à la revendication 1 ou à la revendication 2, dans lequel au moins la portion de soutien (21) du joint d'étanchéité (20) est collée au vitrage (10).

4. Vitrage de véhicule (10) conformément à l'une quelconque des revendications précédentes, dans lequel la portion d'étanchéité substantiellement souple (22) du joint d'étanchéité (20) est mécaniquement interconnectée avec la portion de soutien substantiellement rigide (21) du joint d'étanchéité (20).

5. Vitrage de véhicule (10) conformément à l'une quelconque des revendications précédentes, dans lequel la portion d'espacement substantiellement souple (24) du joint d'étanchéité (20) est mécaniquement interconnectée (31) avec la portion de soutien substantiellement rigide (21) du joint d'étanchéité (20).

6. Vitrage de véhicule (10) conformément à l'une quelconque des revendications précédentes, dans lequel
- la portion de soutien substantiellement rigide (21) du joint d'étanchéité (20) a une dureté Shore A qui est supérieure à 60 et
- la portion d'étanchéité souple (22) et la portion d'espacement substantiellement souple (24) ont une dureté Shore A qui est inférieure à 50.

7. Vitrage de véhicule (10) conformément à l'une quelconque des revendications précédentes, dans lequel la portion de soutien substantiellement rigide (21) du joint d'étanchéité (20) consiste essentiellement en du polyuréthanne.

8. Vitrage de véhicule (10) conformément à l'une quelconque des revendications précédentes, dans lequel la portion d'étanchéité souple (22) et la portion d'espacement substantiellement souple (24) du joint d'étanchéité (20) consistent essentiellement en un matériau EPDM.

9. Vitrage de véhicule (10) conformément à l'une quelconque des revendications précédentes, dans lequel la portion d'étanchéité substantiellement souple (22) du joint d'étanchéité (20) et la portion d'espacement substantiellement souple (24) du joint d'étanchéité (20) forment une pièce d'un seul tenant.

10. Vitrage de véhicule (10) conformément à l'une quelconque des revendications précédentes, dans lequel
a) la portion de soutien substantiellement rigide (21) du joint d'étanchéité (20) est formé par extrusion
b) la portion d'étanchéité souple (22) et la portion d'espacement substantiellement souple (24) du joint d'étanchéité (20) sont formés par extrusion séparément de la portion de soutien substantiellement rigide (21) du joint d'étanchéité (20) et
c) consécutivement à leur extrusion, la portion d'étanchéité substantiellement souple (22), la portion d'espacement substantiellement souple (24) et la portion de soutien substantiellement rigide (21) du joint d'étanchéité (20) sont assemblées.

11. Vitrage de véhicule (10) conformément à l'une quelconque des revendications précédentes, dans lequel le vitrage de véhicule (10) est adapté de manière à être collé à la carrosserie du véhicule (12, 13).

12. Joint d'étanchéité (20) positionné sur une des surfaces principales (15) d'un vitrage de véhicule (10) qui est adapté de manière à permettre au vitrage (10) comprenant le joint d'étanchéité (20) d'être assemblé de manière substantiellement affleurante dans un encadrement de vitrage (12) d'un véhicule, dans lequel le joint d'étanchéité (20) comprend
- une portion d'étanchéité substantiellement souple (22) comprenant une lèvre (23) adaptée pour offrir un élément d'étanchéité par contact avec la carrosserie d'un véhicule (13) et
- une portion de soutien substantiellement rigide (21) adaptée pour maintenir la distance entre le vitrage (10) et la carrosserie du véhicule (13) et
- une portion d'espacement substantiellement souple (24) à l'aide de laquelle la portion de soutien (21) est adaptée de manière à être espacée de la carrosserie du véhicule (13),
**caractérisée en ce que** la portion de soutien substantiellement rigide (21) est collée sur la face interne (15) du vitrage (10) et la portion d'espacement substantiellement souple (24) empêche le contact direct et le frottement entre la portion substantiellement rigide (21) et la carrosserie (13) du véhicule et agit comme un espaceur physique entre ladite portion de soutien substantiellement rigide (21) et ladite carrosserie (13).

13. Méthode de fabrication d'un joint d'étanchéité (20) pour un vitrage de véhicule (10) conformément à l'une quelconque des revendications précédentes comprenant les étapes
- d'extrusion de la portion de soutien substantiellement rigide (21) du joint d'étanchéité (20) en une seule opération d'extrusion ;
- d'extrusion de la portion d'étanchéité substantiellement souple (22) et de la portion d'espacement substantiellement souple (24) ensemble dans une opération qui est séparée de l'extrusion de la portion de soutien substantiellement rigide (21) ;
- l'assemblage de la portion de soutien substantiellement rigide (21), de la portion d'étanchéité substantiellement souple (22) et de la portion d'espacement substantiellement souple (24) du joint d'étanchéité (20) au moyen d'au moins une interconnexion mécanique (31).
